# DEMANDE DE BREVET EUROPEEN

(11) **EP 2 607 213 A1**
(43) Date de publication de la demande: **26.06.2013**
(21) Numéro de dépôt: 12199203.6
(22) Date de dépôt: 21.12.2012
(51) Int. Cl.: B62D 25/24, B60S 1/60, B60S 1/52, B60R 11/04

(54) **Procédé de montage d'un organe fonctionnel sur un panneau d'habillage de véhicule et pièce de centrage pour la mise en oeuvre de ce procédé**

(30) Priorité: 21.12.2011 FR 1162209
(71) Demandeur: Faurecia Bloc Avant, 92000 Nanterre (FR)
(72) Inventeur: Hardy, Hervé, 25420 COURCELLES LES MONTBELIARD (FR)
(74) Mandataire: Domenego, Bertrand

(57) **Abrégé**

Selon ce procédé de montage, on fixe un support de fixation (12) de l'organe fonctionnel sur le panneau d'habillage en utilisant une pièce de centrage (32) comprenant une première partie de centrage (36) s'insérant avec ajustement dans un orifice (28) du support de fixation (12) prévu pour le passage d'une partie fonctionnelle mobile de l'organe fonctionnel et une deuxième partie de centrage (38) s'insérant avec ajustement dans une ouverture (10) du panneau d'habillage (4) pour le passage d'une partie fonctionnelle au travers du panneau d'habillage (4), pour centrer le support de fixation (12) par rapport à l'ouverture (10).

## Description

La présente invention concerne un ensemble comprenant un panneau d'habillage de véhicule et un organe fonctionnel comprenant une partie fonctionnelle escamotable mobile au travers d'une ouverture du panneau d'habillage.

La présente invention concerne notamment un ensemble comprenant un dispositif de lavage de phare (organe fonctionnel) comprenant une buse escamotable (partie fonctionnelle) pour projeter du liquide de lavage mobile au travers d'une ouverture d'un panneau de carrosserie de véhicule, en particulier une peau de pare-chocs.

Il est possible de munir la buse d'une trappe fermant l'ouverture lorsque la buse est escamotée. Pour des raisons esthétiques et de qualité perçue par l'utilisateur, il est souhaitable d'assurer le centrage de la trappe par rapport à l'ouverture.

Par ailleurs, lorsque le dispositif de lavage de phare est proposé en option, il est possible de former toutes les peaux de pare-chocs sans ouverture pour le passage d'une buse escamotable, et de poinçonner des ouvertures uniquement dans les peaux de pare-chocs destinées aux véhicules équipés de dispositif de lavage de phare.

Néanmoins, du fait des tolérances dans la position des ouvertures formées par poinçonnage, le centrage des trappes s'avère difficile.

EP 1 125 808 divulgue un dispositif de lavage de phare, comprenant un cadre disposé le long d'un bord de l'ouverture, la trappe étant munie de pions de centrage s'insérant dans des trous de centrage correspondants du cadre.

Néanmoins, un tel dispositif de lavage de phare présente un surcoût de fait de sa complexité intrinsèque et de son assemblage compliqué.

Un des objets de la présente invention est de permettre de prévoir un ensemble comprenant un panneau d'habillage et un organe fonctionnel comprenant une partie fonctionnelle mobile au travers d'une ouverture du panneau d'habillage, qui soit simple, fiable et peu coûteux à mettre en oeuvre, tout en permettant de répondre aux critères esthétiques.

A cet effet, l'invention propose un procédé de montage d'un organe fonctionnel sur un panneau d'habillage de véhicule, l'organe fonctionnel comprenant un support de fixation pour fixer l'organe fonctionnel sur le panneau et une partie fonctionnelle mobile par rapport au support de fixation de manière à se déplacer au travers d'une ouverture du panneau d'habillage, dans lequel on fixe le support de fixation sur le panneau en utilisant une pièce de centrage comprenant une première partie de centrage s'insérant avec ajustement dans un orifice du support de fixation prévu pour le passage de la partie fonctionnelle et une deuxième partie de centrage s'insérant avec ajustement dans l'ouverture, pour centrer le support de fixation par rapport à l'ouverture.

Selon d'autres modes de mise en oeuvre, le procédé de montage comprend un ou plusieurs des caractéristiques suivantes, prise(s) isolément ou selon toutes les combinaisons techniquement possibles :
- on insère la première partie de centrage dans l'orifice, puis on applique le support de fixation contre le panneau d'habillage, la deuxième partie de centrage s'insérant dans l'ouverture ;
- on récupère la pièce de centrage en l'éjectant au travers de l'ouverture du panneau d'habillage ;
- on récupère la pièce de centrage en l'éjectant au travers de l'orifice du support de fixation ;
- on presse le support de fixation contre le panneau à l'aide d'une presse en centrant la presse à l'aide de la pièce de centrage ;
- la pièce de centrage est munie d'un trou traversant la pièce de centrage, et la presse comprend une tige, et dans lequel on passe la tige au travers du trou de la pièce de centrage pour centrer la presse par rapport à l'ouverture ;
- on fixe le support de fixation sur le panneau par collage ;
- le panneau est un panneau de carrosserie ;
- l'organe fonctionnel est un dispositif de lavage de phare, la partie fonctionnelle étant une buse pour projeter du liquide de lavage sur un phare.
- on fixe une trappe pour fermer l'ouverture sur la partie fonctionnelle de telle manière que la trappe ferme l'ouverture lorsque la partie fonctionnelle est escamotée.
- on forme l'ouverture dans la le panneau d'habillage initialement fermée à l'endroit de l'ouverture, notamment par poinçonnage.

L'invention concerne également une pièce de centrage pour le montage d'un organe fonctionnel sur un panneau de véhicule, l'organe fonctionnel comprenant un support de fixation pour la fixation de l'organe fonctionnel sur le panneau d'habillage et une partie fonctionnelle mobile par rapport au support de fixation de manière se déplacer au travers d'une ouverture du panneau, le support de fixation possédant un orifice en regard de l'ouverture pour le passage de la partie fonctionnelle, la pièce de centrage s'étendant suivant un axe et comprenant une première partie axiale prévue pour s'insérer avec ajustement dans l'orifice du support de fixation et une deuxième partie axiale prévue pour s'insérer avec ajustement dans l'ouverture, l'une de la première partie de centrage et de la deuxième partie de centrage présentant en vue axiale un contour s'insérant dans celui de l'autre parmi la première partie de centrage et de la deuxième partie de centrage.

Selon un mode de réalisation la pièce de centrage comprend un trou traversant la pièce de centrage axialement.

L'invention concerne encore une ensemble pour véhicule comprenant un panneau et un organe fonctionnel comprenant un support de fixation pour la fixation de l'organe fonctionnel sur le panneau et une partie fonctionnelle mobile par rapport au support de fixation de manière se déplacer au travers d'une ouverture du panneau entre une position rentrée en arrière du panneau et une position sortie en saillie du panneau, et une trappe pour fermer l'ouverture en position rentrée de la partie fonctionnelle, **caractérisé en ce que** le support de fixation comprend une plaque en appui contre le panneau, la plaque étant munie d'un orifice en regard de l'ouverture pour le passage de la partie fonctionnelle lors de son déplacement, l'orifice étant de dimensions inférieure à celles de l'ouverture, la plaque comprenant une région entourant l'orifice visible au travers de l'ouverture.

Selon un mode de réalisation, le panneau est un panneau de carrosserie, l'organe fonctionnel est un dispositif de lavage de phare et la partie fonctionnelle est une buse escamotable pour projeter du liquide de lavage.

L'invention et ses avantages seront mieux compris à la lecture de la description qui va suivre, donnée uniquement à titre d'exemple et faite en se référant aux dessins annexés, sur lesquels :
- les Figures 1 et 2 sont des vues schématiques en élévation et partiellement en coupe d'un ensemble comprenant dispositif de lavage de phare monté sur un panneau de carrosserie, dans deux configurations différentes ;
- la Figure 3 est une vue en coupe d'une pièce de centrage pour le montage de l'ensemble de lavage de phare;
- les Figures 4 à 8 sont des vues analogues à celles des Figures 1 et 2, illustrant des étapes d'un procédé de montage de l'ensemble de lavage de phare du module selon le procédé de l'invention.

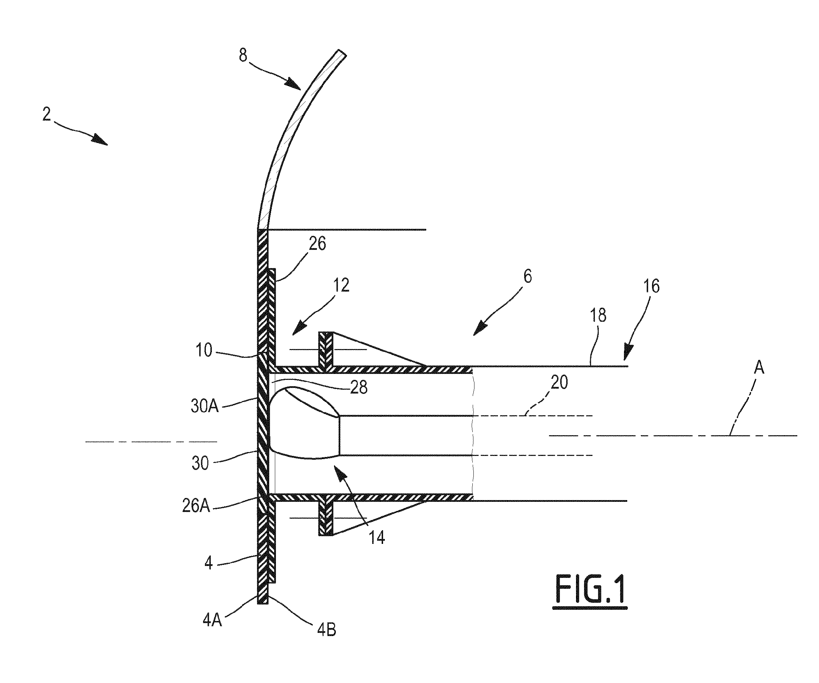

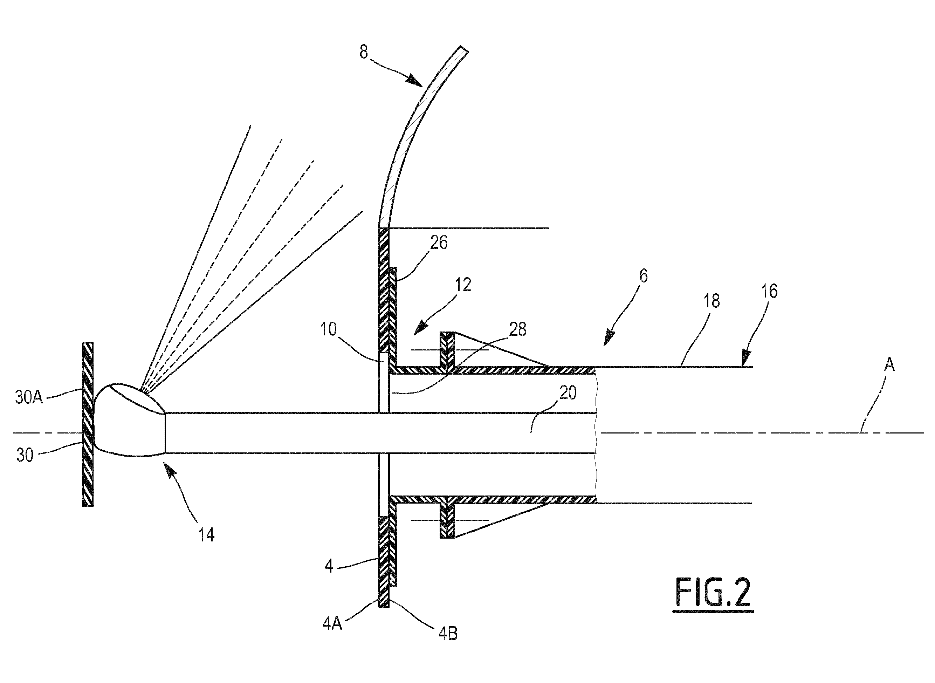

Tel qu'illustré sur les Figures 1 et 2, l'ensemble 2 comprend un panneau de carrosserie 4 et un dispositif de lavage de phare 6 monté sur le panneau de carrosserie 4 pour le lavage d'un phare 8 d'éclairage.

Le panneau de carrosserie 4 présente une face externe 4A et une face interne 4B opposées. La face externe 4A est destinée à être visible et tournée vers l'extérieur du véhicule. Le panneau de carrosserie 4 est munie d'une ouverture 10 traversante s'étendant entre la face externe 4A et la face interne 4B.

Le panneau de carrosserie 4 est un panneau d'habillage externe du véhicule, définissant la forme extérieure du véhicule. Le panneau de carrosserie 4 est par exemple une peau de pare-chocs avant recouvrant un ensemble pare-chocs avant du véhicule, destiné à absorber au moins partiellement l'énergie d'un choc frontal.

Le phare 8 est par exemple un phare avant pour l'éclairage de la route à l'avant du véhicule. Le phare 8 comprend de manière connue en soi une ou plusieurs lampes ayant des fonctions d'éclairage distinctes (feux diurnes, feux de croisement, feux de routes, feux de brouillard, clignotant...).

Le dispositif de lavage de phare 6 comprend un support de fixation 12 pour fixer le dispositif de lavage de phare 6 sur le panneau de carrosserie 4 et une buse 14 escamotable pour projeter du liquide de lavage sous pression sur le phare 8. La buse 14 est alimentée en liquide de lavage de manière connue en soi.

La buse 14 est montée mobile par rapport au support de fixation 12 de manière à se déplacer au travers de l'ouverture 10, entre une position rentrée (Figure 1) dans laquelle la buse 14 est escamotée en arrière de la pièce de carrosserie 4, et une position sortie (Figure 2) dans laquelle la buse 14 fait saillie en avant de la pièce de carrosserie 4 pour projeter du liquide de lavage sous pression sur le phare 8. La buse 14 est mobile au travers de l'ouverture 10 en translation rectiligne suivant un axe A.

Le dispositif de lavage de phare 6 comprend un actionneur 16 pour déplacer la buse 14. Dans l'exemple représenté, l'actionneur 16 est un vérin comprenant un cylindre 18 et un piston 20 coulissant suivant l'axe A dans le cylindre 18 sous l'effet d'un fluide sous pression dans le cylindre 18. La buse 14 est solidaire du piston 20. Le cylindre 18 est fixé au support de fixation 12, par exemple par vissage. Le coulissement du piston 20 commande le déplacement de la buse 16 suivant l'axe A entre la position rentrée et la position sortie.

Le support de fixation 12 comprend une plaque 26 en appui contre la face interne 4A. Le support de fixation 12 comprend un orifice 28 traversant la plaque 26. L'orifice 28 est en regard de l'ouverture 10. L'orifice 28 présente transversalement à l'axe A des dimensions inférieures à celles de l'ouverture 10. L'orifice 28 s'inscrit en vue suivant l'axe A à l'intérieur de l'ouverture 10. La plaque 26 comprend une région périphérique 26A entourant l'orifice 28 qui est visible au travers de l'ouverture 10.

Le support de fixation 12 est fixé sur la pièce de carrosserie 4, par exemple par collage de la plaque 26 sur la face interne 4A. Le collage assure une fixation suffisamment rigide et durable tout en restant invisible du côté de la face externe 4B.

L'ensemble de lavage de phare 2 comprend une trappe 30 pour fermer l'ouverture 10 et masquer la buse 14 lorsque celle-ci est en position rentrée.

La trappe 30 est de contour complémentaire de celui de l'ouverture 10. En position fermée de la trappe 30 (Figure 1), la trappe 30 est insérée dans l'ouverture 10, et une face avant 30B de la trappe 30, tournée vers l'extérieur, est de niveau avec la région de la face externe 4B entourant l'ouverture 10 de manière à assurer une continuité de surface avec celle-ci. La trappe 30 en position fermée est de préférence en appui contre la région périphérique 26A de la plaque 26. La région périphérique définit un siège d'appui pour la trappe 30.

La trappe 30 est solidaire de la buse 14. La trappe 30 se déplace conjointement avec la buse 14. La trappe 30 est fermée lorsque la buse 14 est en position rentrée.

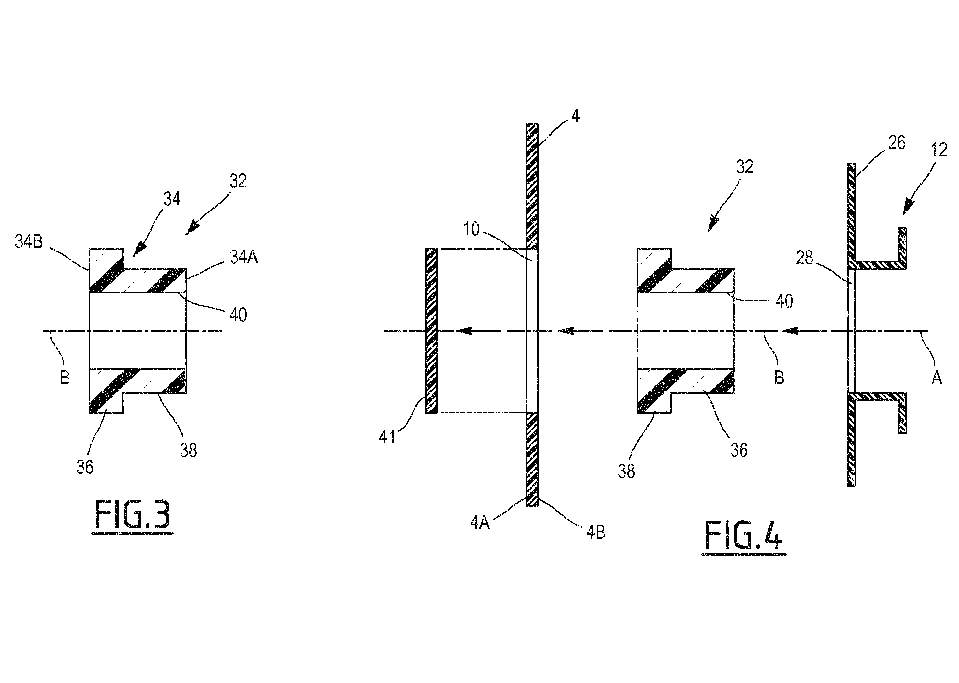

La Figure 3 illustre une pièce de centrage 32 pour le montage de l'ensemble de lavage de phare 2, permettant de monter le dispositif de lavage de phare 6 sur le panneau de carrosserie 4 avec un centrage précis par rapport à l'ouverture 10.

La pièce de centrage 32 comprend un corps 34 s'étendant suivant un axe B entre une première extrémité 34A et une deuxième extrémité 34B. Le corps 34 comprend suivant cet axe B une première partie 36 axiale adjacente à la première extrémité 34A et une deuxième partie 38 axiale adjacente à la deuxième extrémité 34B. La deuxième partie 38 prolonge axialement la première partie 36.

La première partie 36 est prévue pour s'insérer avec ajustement dans l'orifice 28 du support de fixation 12 pour centrer la première partie 36 par rapport à l'orifice 28, de préférence avec un ajustement serré. La première partie 36 présente en section transversale un contour externe complémentaire de celui de l'orifice 28.

La deuxième partie 38 est prévue pour s'insérer avec ajustement dans l'ouverture 10 pour centrer la deuxième partie 38 par rapport à l'ouverture 10, de préférence avec un ajustement serré. La deuxième partie 38 présente en section transversale un contour externe complémentaire de celui de l'ouverture 10.

La pièce de centrage 32 comprend un trou 40 traversant le corps 34 suivant l'axe B, de la première extrémité 34A à la deuxième extrémité 34B. Le trou 40 traverse la première partie 36 et la deuxième partie 38.

La pièce de centrage 32 est propre à traverser l'ouverture 10. La pièce de centrage 32 présente en vue suivant l'axe B un contour hors tout s'inscrivant dans celui de l'ouverture 10 en vue suivant l'axe A. La première partie 36 présente en vue suivant l'axe B un contour s'inscrivant dans celui de la deuxième partie 38.

Un procédé de montage de l'ensemble de lavage de phare 2 est décrit par la suite en référence aux Figures 4 à 8 illustrant des étapes successives du procédé.

Tel qu'illustré sur la Figure 4, on fournit la pièce de carrosserie 4 avec l'ouverture 10, le support de fixation 12 avec l'orifice 28 et la pièce de centrage 32.

Comme cela est représenté sur la Figure 4, la pièce de carrosserie 4 est initialement fermée à l'endroit de l'ouverture 10 et l'ouverture 10 est formée dans la pièce de carrosserie 4, par exemple par poinçonnage. Une pastille 41 est ainsi retirée de la pièce de carrosserie 4.

La plaque 26 du support de fixation 12 est munie sur sa face orientée vers la face interne 4A d'un adhésif pour le collage du support de fixation 12 sur la pièce de carrosserie 4.

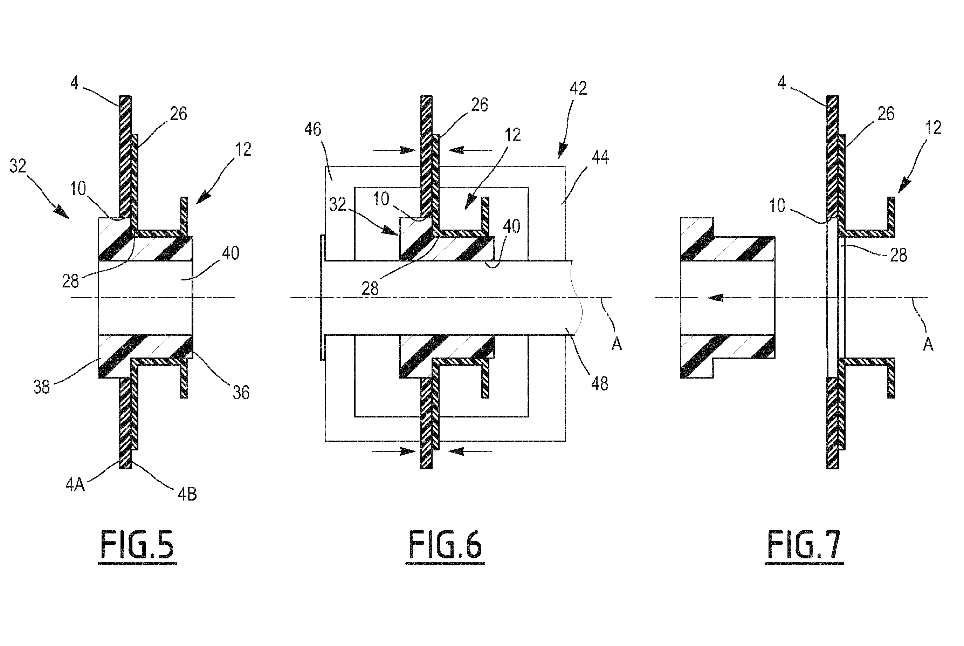

Ensuite, tel qu'illustré sur la Figure 5, on applique le support de fixation 12 contre la pièce de carrosserie 4 en insérant respectivement la première partie 36 dans l'orifice 28 et la deuxième partie 38 dans l'ouverture 10.

Pour ce faire, dans un mode de mise en oeuvre possible, on insère la première partie 36 dans l'orifice 28 puis on applique le support de fixation 12 portant la pièce de centrage 32 contre la face interne 4B de la pièce de carrosserie 4, de telle manière que la deuxième partie 38 s'insère dans l'ouverture 10.

Du fait des ajustements entre la pièce de centrage 32 et, d'une part, l'orifice 28 du support de fixation 12 et, d'autre part, l'ouverture 10 de la pièce de carrosserie 4, le support de fixation 12 est centré par rapport à l'ouverture 10 de la pièce de carrosserie 4 de manière simple, précise et stable. L'axe B coïncide avec l'axe A. Ensuite, tel qu'illustré sur la Figure 6, on presse le support de fixation 12 contre la pièce de carrosserie 4. Ceci permet de presser l'adhésif entre le support de fixation 12 et la pièce de carrosserie 4.

A cet effet, on utilise une presse 42 comprenant une première mâchoire 44 et une deuxième mâchoire 46 mobiles en translation l'une par rapport à l'autre suivant l'axe A, et une tige de traction 48 pour guider la première mâchoire 44 et la deuxième mâchoire 46 en translation suivant l'axe A l'une par rapport à l'autre et les serrer axialement l'une contre l'autre. La tige de traction 48 est prévue pour passer au travers du trou 40 de la pièce de centrage 32 en étant guidée dans ce trou 40.

On dispose la première mâchoire 44 et la deuxième mâchoire 46 de part et d'autre de la pièce de carrosserie 4 et du support de fixation 12, en les reliant par la tige de traction 48 s'étendant au travers du trou 40 de la pièce de centrage 32. Ensuite on applique un effort de serrage des mâchoires 44, 46 de manière à presser le support de fixation 12 contre la pièce de carrosserie 4.

La tige de traction 48 traversant le trou 40 permet d'appliquer un effort de serrage important sans risque de déplacement du support de fixation 12 par rapport à l'ouverture 10.

Ensuite, on retire la presse 42.

Ensuite, tel qu'illustré sur la Figure 7, on pousse la pièce de centrage 32 axialement suivant l'axe A au travers du support de fixation 12 et de l'ouverture 10 de façon à éjecter la pièce de centrage 32 au travers de l'ouverture 10, du côté de la face externe 4A. La pièce de centrage 32 est poussée par un opérateur manuellement ou à l'aide d'un outil, ou par un robot.

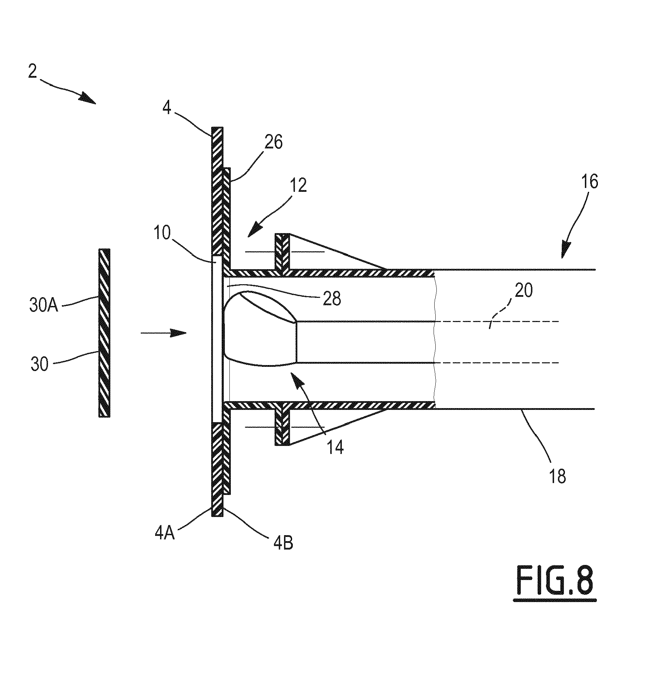

Ensuite, tel qu'illustré sur la Figure 8, on fixe l'actionneur 16 sur le support de fixation 12, par exemple par vissage du cylindre 18 sur le support de fixation 12, puis on fixe la trappe 30 sur la buse 16, de préférence en position rentrée de la buse 16, ce qui permet de centrer la trappe 30 par rapport à l'ouverture 10.

Le procédé de montage selon l'invention permet de réaliser un centrage précis et durable de manière simple.

Le centrage précis du dispositif de lavage de phare 6 permet d'assurer le centrage de la trappe 30 par rapport à l'ouverture 10 de façon à assurer des jeux précis entre le bord de la trappe 30 et le bord de l'ouverture 10. Ceci permet d'assurer que la qualité perçue par le client est bonne.

Il n'est pas nécessaire de prévoir des moyens de centrage complémentaires sur le panneau de carrosserie 4 et la trappe 30 ce qui permet de simplifier l'ensemble et d'en réduire el coût de fabrication et d'assemblage.

La pièce de centrage 32 est récupérée et réutilisée pour le montage d'un autre ensemble.

Dans l'exemple illustré, le contour de la première partie 36 s'inscrit dans celui de la deuxième partie 38 de la pièce de centrage 32, ce qui permet d'éjecter la partie de centrage 32 au travers de l'ouverture 10, de l'intérieur vers l'extérieur. En variante, le contour de la deuxième partie 38 s'inscrit dans celui première partie 36 de la pièce de centrage 32, ce qui permet d'éjecter la partie de centrage 32 au travers de l'orifice 28, de l'extérieur vers l'intérieur.

Dans l'exemple illustré, le panneau de carrosserie 4 définit un panneau d'habillage extérieur du véhicule, et le dispositif de lavage de phare définit un organe fonctionnel, ayant pour fonction le lavage de phare, la buse définissant une partie fonctionnelle mobile au travers d'une ouverture du panneau d'habillage.

L'invention n'est pas limitée au montage d'un dispositif de lavage de phare sur un panneau de carrosserie.

De manière générale, l'invention s'applique au montage au montage de tout organe fonctionnel sur un panneau, notamment un panneau d'habillage intérieur ou extérieur de véhicule, l'organe fonctionnel comprenant une partie fonctionnelle mobile prévue pour se déplacer au travers d'une ouverture du panneau.

L'invention s'applique par exemple au montage d'un dispositif d'aide à la conduite comprenant une caméra escamotable mobile au travers d'une ouverture d'un panneau de carrosserie, par exemple pour aider le conducteur lors de manoeuvres de parcage de véhicule.

## Revendications

1. Procédé de montage d'un organe fonctionnel (6) sur un panneau d'habillage (4) de véhicule, l'organe fonctionnel (6) comprenant un support de fixation (12) pour fixer l'organe fonctionnel (6) sur le panneau et une partie fonctionnelle (16) mobile par rapport au support de fixation de manière à se déplacer au travers d'une ouverture (10) du panneau d'habillage, dans lequel on fixe le support de fixation (12) sur le panneau en utilisant une pièce de centrage comprenant une première partie de centrage s'insérant avec ajustement dans un orifice (28) du support de fixation (12) prévu pour le passage de la partie fonctionnelle (14) et une deuxième partie de centrage s'insérant avec ajustement dans l'ouverture (10), pour centrer le support de fixation (12) par rapport à l'ouverture (10).

2. Procédé de montage selon la revendication 1, dans lequel on insère la première partie de centrage (36) dans l'orifice (10), puis on applique le support de fixation (12) contre le panneau d'habillage (4), la deuxième partie de centrage (38) s'insérant dans l'ouverture (10).

3. Procédé de montage selon la revendication 1 ou 2, dans lequel on récupère la pièce de centrage en l'éjectant au travers de l'ouverture du panneau d'habillage.

4. Procédé de montage selon la revendication 1 ou 2, dans lequel on récupère la pièce de centrage en l'éjectant au travers de l'orifice du support de fixation.

5. Procédé de montage selon l'une quelconque des revendications précédentes, dans lequel on presse le support de fixation (12) contre le panneau (4) à l'aide d'une presse (42) en centrant la presse (42) à l'aide de la pièce de centrage (32).

6. Procédé de montage selon la revendication 5, dans lequel la pièce de centrage (32) est munie d'un trou (40) traversant la pièce de centrage (32), et la presse (42) comprend une tige (48), et dans lequel on passe la tige (48) au travers du trou (40) de la pièce de centrage (32) pour centrer la presse (42) par rapport à l'ouverture (10).

7. Procédé de montage selon l'une quelconque des revendications précédentes, dans lequel on fixe le support de fixation (12) sur le panneau par collage.

8. Procédé de montage selon l'une quelconque des revendications précédentes, dans lequel le panneau (4) est un panneau de carrosserie.

9. Procédé de montage selon l'une quelconque des revendications précédentes, dans lequel l'organe fonctionnel est un dispositif de lavage de phare, la partie fonctionnelle étant une buse pour projeter du liquide de lavage sur un phare.

10. Procédé de montage selon l'une quelconque des revendications précédentes, dans lequel on fixe une trappe (30) pour fermer l'ouverture sur la partie fonctionnelle de telle manière que la trappe (30) ferme l'ouverture lorsque la partie fonctionnelle est escamotée.

11. Procédé de montage selon l'une quelconque des revendications précédentes, dans lequel on forme l'ouverture (10) dans le panneau d'habillage (4) initialement fermée à l'endroit de l'ouverture (10), notamment par poinçonnage.

12. Pièce de centrage (32) pour le montage d'un organe fonctionnel (6) sur un panneau (4) de véhicule, l'organe fonctionnel (6) comprenant un support de fixation (12) pour la fixation de l'organe fonctionnel sur le panneau d'habillage et une partie fonctionnelle (14) mobile par rapport au support de fixation (12) de manière se déplacer au travers d'une ouverture (10) du panneau (4), le support de fixation (12) possédant un orifice (28) en regard de l'ouverture (10) pour le passage de la partie fonctionnelle, la pièce de centrage (32) s'étendant suivant un axe (B) et comprenant une première partie axiale (36) prévue pour s'insérer avec ajustement dans l'orifice (28) du support de fixation (12) et une deuxième partie axiale (38) prévue pour s'insérer avec ajustement dans l'ouverture (10), l'une de la première partie de centrage et de la deuxième partie de centrage présentant en vue axiale un contour s'insérant dans celui de l'autre parmi la première partie de centrage et de la deuxième partie de centrage.

13. Pièce de centrage selon la revendication 12, comprenant un trou (40) traversant la pièce de centrage axialement.

14. Ensemble pour véhicule comprenant un panneau (4) et un organe fonctionnel (6) comprenant un support de fixation (12) pour la fixation de l'organe fonctionnel sur le panneau (4) et une partie fonctionnelle (14) mobile par rapport au support de fixation (12) de manière se déplacer au travers d'une ouverture (10) du panneau (4) entre une position rentrée en arrière du panneau (4) et une position sortie en saillie du panneau (4), et une trappe pour fermer l'ouverture (10) en position rentrée de la partie fonctionnelle (14), **caractérisé en ce que** le support de fixation (12) comprend une plaque (26) en appui contre le panneau, la plaque (26) étant munie d'un orifice (28) en regard de l'ouverture (10) pour le passage de la partie fonctionnelle (14) lors de son déplacement, l'orifice étant de dimensions inférieure à celles de l'ouverture, la plaque (26) comprenant une région entourant l'orifice (28) visible au travers de l'ouverture (10).

15. Ensemble pour véhicule selon la revendication 14, dans lequel le panneau est un panneau de carrosserie, l'organe fonctionnelle est un dispositif de lavage de phare et la partie fonctionnelle est une buse escamotable pour projeter du liquide de lavage.
